(19) Europäisches Patentamt
European Patent Office
Office européen des brevets

(11) **EP 1 858 215 A1**

(12) **EUROPEAN PATENT APPLICATION**

(43) Date of publication:
**21.11.2007 Bulletin 2007/47**

(51) Int Cl.:
*H04L 27/34* (2006.01)   *H04L 25/06* (2006.01)

(21) Application number: **07105726.9**

(22) Date of filing: **05.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **15.05.2006   KR 20060043414**

(71) Applicant: **Samsung Electronics Co., Ltd.**
**Suwon-si, Gyeonggi-Do (KR)**

(72) Inventor: **Kim, Yun Young**
**Suwon-si,**
**Gyeonggi-do 443-400 (KR)**

(74) Representative: **Grünecker, Kinkeldey,**
**Stockmair & Schwanhäusser**
**Anwaltssozietät**
**Maximilianstrasse 58**
**80538 München (DE)**

(54) **Dual carrier modulation (DCM) demapping method and demapper**

(57)     A dual carrier modulation (DCM) demapping method and a DCM demapper using the method are provided. The DCM demapping method includes: receiving DCM constellation sets; respectively calculating a one-dimensional log likelihood ratio (LLR) for each bit of each constellation set; and diversity combining the calculated one-dimensional LLR to calculate an output of an LLR.

**FIG. 4**

**Description**

BACKGROUND OF THE INVENTION

**1. Field of the Invention**

Methods and apparatuses consistent with the present invention relate to a Dual Carrier Modulation (DCM) demapping method, and more particularly to a soft-output demapper used for demodulation of the DCM demapping method.

**2. Description of Related Art**

DCM increases a frequency diversity gain in a receiver so as to improve error effectiveness for a high speed data rate, i.e. over approximately 320 Mbps, by broadening a frequency domain.

For broadening a frequency domain in a transceiver, the DCM executes mapping of a quadrature phase shift keying (QPSK) modulated signal into a 16-quadrature amplitude modulation (QAM)-type constellation by using a DCM matrix. The DCM repeatedly executes the mapping of the signal so that it has a frequency spacing of a half number of a total sub carrier frequency. Frequency spreading is used for an input of an inverse fast Fourier transform (IFFT).

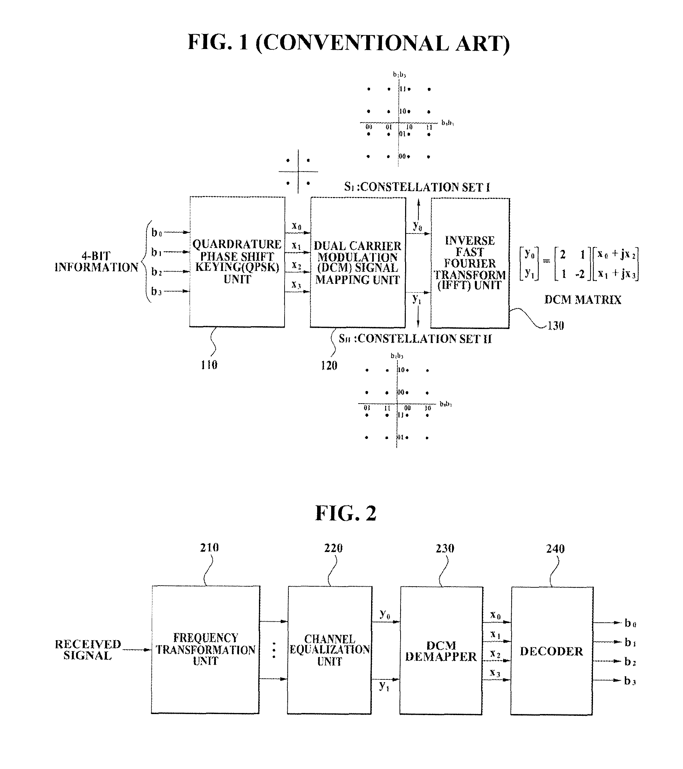

FIG. 1 is a block diagram illustrating a conventional DCM. Referring to FIG. 1, the conventional DCM uses a QPSK unit 110, a DCM signal mapping unit 120 and an IFFT unit 130.

The QPSK unit 110 QPSK modulates four-bit input information.

The DCM signal mapping unit 120 executes mapping of four signals which are QPSK modulated to be mapped, into two constellation sets of DCM signals.

In this case, the two DCM signals undergo frequency spreading to provide diversity. In this case, a function of the DCM mapping unit 120 may be represented by a matrix in FIG. 1.

A DCM receiver that receives a transmitted signal from a DCM transceiver is required to execute DCM demodulation. In this case, the DCM demodulation is required to repeatedly execute demapping of the two DCM signals corresponding to the DCM signal mapping unit 120 in FIG. 1. The demapping operation may be executed by multiplying a received DCM signal by an inverse matrix of the matrix in FIG. 1. However, when the demapping operation is executed by the above method, a sufficient diversity gain by the frequency spreading may not be obtained due to an additional intersymbol interference (ISI) caused by incomplete channel estimation or a synchronization error.

In order to solve the above described problem, a two-dimensional soft-output demapper has been suggested. The two-dimensional soft-output demapper improves an error effectiveness by improving reliability for an input of a Viterbi decoder, by using information of a log likelihood ratio (LLR) calculated from received DCM symbols $y_0$ and $y_1$.

However, the two-dimensional soft-output demapper has a problem of requiring excessive calculations since a complicated two-dimensional LLR, having two variables for each bit, must be calculated. Also, in comparison to the two-dimensional soft-output demapper, a method using a look-up table capable of more simply demapping the DCM symbol has been suggested. However, the method has a problem in that it requires a great number of the look-up tables and additions per clock.

Subsequently, a new DCM demapping method and a DCM demapper capable of more effectively executing demapping of the DCM symbol are earnestly required.

BRIEF SUMMARY

According to an aspect of the present invention, a DCM demapping method includes: receiving DCM constellation sets; respectively calculating a one-dimensional LLR for each bit of each constellation set; and diversity combining the calculated one-dimensional LLR to calculate an output of an LLR.

In this case, the calculating of the one-dimensional LLR may calculate the LLR for each bit using either a real number component or an imaginary number component of a DCM symbol.

In this case, the calculating of the one-dimensional LLR may calculate the LLR using at least a partially linear function for either a real number component or the imaginary number component of the DCM symbol.

According to another aspect of the present invention, a DCM demapping method includes: receiving DCM constellation sets; diversity combining a calculated one-dimensional LLR for each bit of each constellation set to calculate an LLR; and decoding using the output of the LLR to recover a transmission signal.

In this case, the recovering of the transmission signal may execute a Viterbi decoding.

In this case, the DCM modulation method further includes: executing frequency transformation of a received signal; and executing channel equalization of the frequency transformed signal to generate DCM signals. In this case, the frequency transforming may be a fast Fourier transform (FFT).

According to another aspect of the present invention, a DCM demapper includes: a one-dimensional LLR calculation unit that receives DCM constellation sets and respectively calculates a one-dimensional LLR for each bit of each constellation set; and a diversity combining unit diversity combining the calculated one-dimensional LLR to calculate an output of an LLR.

BRIEF DESCRIPTION OF THE DRAWINGS

The above and/or other aspects and advantages of the present invention will become apparent and more readily appreciated from the following detailed description, taken in conjunction with the accompanying drawings of which:

FIG. 1 is a block diagram illustrating a conventional DCM;

FIG. 2 is a block diagram illustrating a DCM demodulation device according to an exemplary embodiment of the present invention;

FIGS. 3 and 4 are diagrams for comparing between the DCM demapping methods of the exemplary embodiment of the present invention and a conventional DCM mapping method;

FIG. 5 is a flowchart illustrating a DCM demodulation method according to an exemplary embodiment of the present invention;

FIG. 6 is a flowchart illustrating operations of calculating an output of an LLR in FIG. 5;

FIG. 7 is a diagram illustrating a one-dimensional LLR for each bit according to changes of a real number component or an imaginary number component of a DCM symbol; and

FIG. 8 is a diagram illustrating an equation that the one-dimensional LLR for the each bit is linear-modeled according to changes of the real number component or the imaginary number component of the DCM symbol in FIG. 7.

DETAILED DESCRIPTION OF EXEMPLARY EMBODIMENTS

Reference will now be made in detail to exemplary embodiments of the present invention, examples of which are illustrated in the accompanying drawings, wherein like reference numerals refer to the like elements throughout. The exemplary embodiments are described below in order to explain the present invention by referring to the figures.

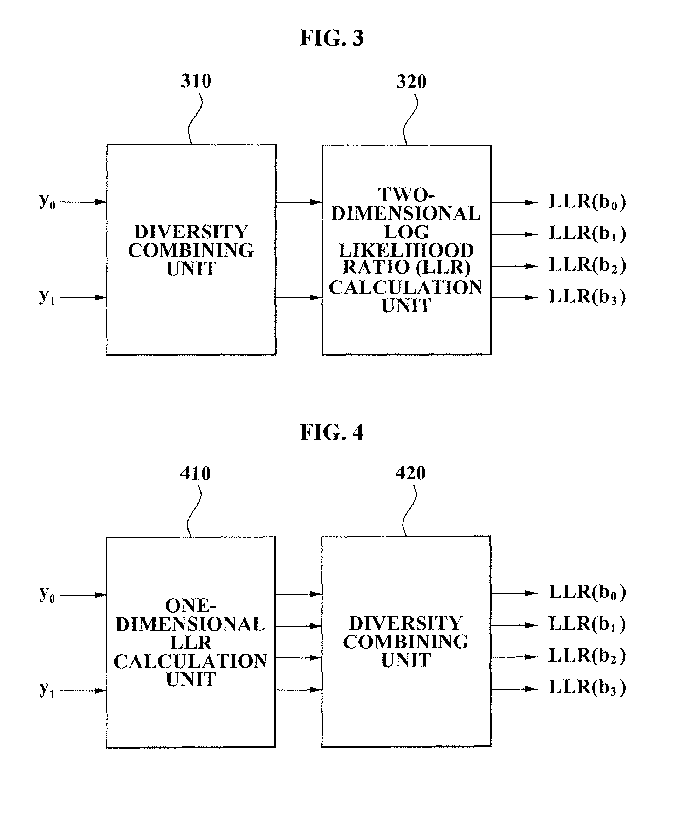

FIG. 2 is a block diagram illustrating a DCM demodulation device according to an exemplary embodiment of the present invention.

Referring to FIG. 2, the DCM demodulation device according to the exemplary embodiment of the present invention includes a frequency transformation unit 210, a channel equalization unit 220, a DCM demapper 230, and a decoder 240.

The frequency transformation unit 210 executes frequency transformation for a received signal, i.e. an input signal. In this case, the frequency transformation may be an FFT.

The channel equalization unit 220 generates a DCM symbol by executing channel equalization for an output signal of the frequency transformation unit 210.

The DCM demapper 230 executes DCM demapping using the DCM symbol. In this case, the DCM demapper 230 may generate an output of a log likelihood ratio (LLR). Also, the DCM demapper 230 respectively calculates a one-dimensional LLR for each bit of each constellation set, and diversity combines the calculated one-dimensional LLR to calculate an output of an LLR.

In this case, the DCM demapper 230 may calculate a one-dimensional LLR using either a real number component or an imaginary number component of a DCM symbol.

In this case, the DCM demapper 230 may calculate the one-dimensional LLR using at least a partially linear function for either the real number component or the imaginary number component of the DCM symbol.

The decoder 240 decodes uses an output of the demapper 230 to recover a transmission signal. In this case, the decoder 240 may be a Viterbi decoder.

FIGS. 3 and 4 are diagrams for comparing between the DCM demapping methods of the exemplary embodiment of the present invention and a conventional DCM mapping method.

FIG. 3 is a block diagram illustrating the conventional DCM demapper.

Referring to FIG. 3, the conventional DCM demapper includes a diversity combining unit 310 and a two-dimensional LLR calculation unit 320.

The diversity combining unit 310 executes diversity combining for two inputted DCM symbols $y_0$, $y_1$.

The two-dimensional LLR calculation unit 320 generates a two-dimensional LLR output using the output signal of the diversity combining unit 310. In this case, the two-dimensional LLR calculation unit 320 has two variables respectively corresponding to different constellation sets, so the calculation is complicated.

Equation 1 below indicates a calculation of the DCM demapper in FIG. 3.

[Equation 1]

$$\Lambda(b_k) = log\left\{\sum_{s^+\in\{s_I:b_k=1\}} exp\left(-\frac{|y_0-s^+|^2}{\sigma_n^2}\right) + \sum_{s^+\in\{s_{II}:b_k=1\}} exp\left(-\frac{|y_1-s^+|^2}{\sigma_n^2}\right)\right\}$$

$$-log\left\{\sum_{s^-\in\{s_I:b_k=0\}} exp\left(-\frac{|y_0-s^-|^2}{\sigma_n^2}\right) + \sum_{s^-\in\{s_{II}:b_k=0\}} exp\left(-\frac{|y_1-s^-|^2}{\sigma_n^2}\right)\right\}, k=\{0,1,2,3\}$$

$\Lambda(b_k)$:      LLR (log-likelihood ratio) for the $b^{th}$ bit $b_k$

$S_I$:      the 1st set of the two DCM constellations, $S_{II}$: the 2nd set of the two DCM constellations

$S^+ \in \{S_I : b_k = 1\}$:      symbols corresponding to $b_k = 1$ in the constellation set $S_I$

$S^- \in \{S_I : b_k = 0\}$:      symbols corresponding to $b_k = 0$ in the constellation set $S_I$

$S^+ \in \{S_{II} : b_k = 1\}$:      symbols corresponding to $b_k = 1$ in the constellation set $S_{II}$

$S^- \in \{S_{II} : b_k = 0\}$:      symbols corresponding to $b_k = 0$ in the constellation set $S_{II}$

$\sigma_n^2$:      noise power

In equation 1, $y_0$, $y_1$ indicate DCM symbols, respectively, variable names used in equation 1 corresponds to variable names in FIG. 1.

FIG. 4 is a block diagram illustrating a DCM demapper according to an exemplary embodiment of the present invention.

Referring to FIG. 4, the DCM demapper according to the exemplary embodiment of the present invention includes a one-dimensional LLR calculation unit 410 and a diversity combining unit 420.

According to the present exemplary embodiment, a real number component and an imaginary number component of a DCM symbol are respectively generated by {b0, b1} and {b2, b3}, so that the LLR for each bit may be calculated using either the real number component or the imaginary number component of the DCM symbol.

Namely, the DCM demapping is not executed by equation 1, but executed by equations 2 and 3 below.

[Equation 2]

$$\Lambda(b_k) = log\left\{\sum_{s^+\in\{s_I:b_k=1\}} exp\left(-\frac{|\text{Re}\{y_0\}-\text{Re}\{s^+\}|^2}{\sigma_n^2}\right) + \sum_{s^+\in\{s_{II}:b_k=1\}} exp\left(-\frac{|\text{Re}\{y_1\}-\text{Re}\{s^+\}|^2}{\sigma_n^2}\right)\right\}$$

$$-log\left\{\sum_{s^-\in\{s_I:b_k=0\}} exp\left(-\frac{|\text{Re}\{y_0\}-\text{Re}\{s^-\}|^2}{\sigma_n^2}\right) + \sum_{s^-\in\{s_{II}:b_k=0\}} exp\left(-\frac{|\text{Re}\{y_1\}-\text{Re}\{s^-\}|^2}{\sigma_n^2}\right)\right\}, k\in\{0,1\}$$

[Equation 3]

$$\Lambda(b_k) = log\left\{\sum_{s^+\in\{s_I:b_k=1\}} exp\left(-\frac{|\text{Im}\{y_0\}-\text{Im}\{s^+\}|^2}{\sigma_n^2}\right) + \sum_{s^+\in\{s_{II}:b_k=1\}} exp\left(-\frac{|\text{Im}\{y_1\}-\text{Im}\{s^+\}|^2}{\sigma_n^2}\right)\right\}$$

$$-log\left\{\sum_{s^-\in\{s_I:b_k=0\}} exp\left(-\frac{|\text{Im}\{y_0\}-\text{Im}\{s^-\}|^2}{\sigma_n^2}\right) + \sum_{s^-\in\{s_{II}:b_k=0\}} exp\left(-\frac{|\text{Im}\{y_1\}-\text{Im}\{s^-\}|^2}{\sigma_n^2}\right)\right\}, k\in\{2,3\}$$

Furthermore, in the present exemplary embodiment, $y_0$ and $y_1$ are generated by a different constellation, and

an LLR for $y_0$ and an LLR for $y_1$ are independent from each other, therefore, the DCM demapping is executed after respectively calculating the one-dimensional LLR and diversity combining.

Consequently, the one-dimensional LLR calculation unit 410 respectively calculates the one-dimensional LLR for each bit of the constellation set, and the diversity combining unit 420 executes diversity combining of the calculated one-dimensional LLR to calculate an output of the LLR.

The calculation operation is represented by equation 4 and equation 5 below.

[Equation 4]

$$\Lambda(b_k) = \log\left\{\sum_{s^+\in\{s_I:b_k=1\}} exp\left(-\frac{|\operatorname{Re}\{y_0\}-\operatorname{Re}\{s^+\}|^2}{\sigma_n^2}\right)\right\} - \log\left\{\sum_{s^-\subset\{s_I:b_k=1\}} exp\left(-\frac{|\operatorname{Re}\{y_1\}-\operatorname{Re}\{s^+\}|^2}{\sigma_n^2}\right)\right\}$$
$$+ \log\left\{\sum_{s^+\in\{s_I:b_k=0\}} exp\left(-\frac{|\operatorname{Re}\{y_1\}-\operatorname{Re}\{s'\}|^2}{\sigma_n^2}\right)\right\} - \log\left\{\sum_{s^-\in\{s_{II}:b_k=0\}} exp\left(-\frac{|\operatorname{Re}\{y_1\}-\operatorname{Re}\{s^-\}|^2}{\sigma_n^2}\right)\right\}, k\in\{0,1\}$$

[Equation 5]

$$\Lambda(b_k) = \log\left\{\sum_{s^+\in\{s_I:b_k=1\}} exp\left(-\frac{|\operatorname{Im}\{y_0\}-\operatorname{Im}\{s^+\}|^2}{\sigma_n^2}\right)\right\} - \log\left\{\sum_{s^-\in\{s_{II}:b_k=1\}} exp\left(-\frac{|\operatorname{Im}\{y_0\}-\operatorname{Im}\{s^+\}|^2}{\sigma_n^2}\right)\right\}$$
$$+ \log\left\{\sum_{s^+\subset\{s_I:b_k=0\}} exp\left(-\frac{|\operatorname{Im}\{y_1\}-\operatorname{Im}\{s^+\}|^2}{\sigma_n^2}\right)\right\} - \log\left\{\sum_{s^-\in\{s_{II}:b_k=0\}} exp\left(-\frac{|\operatorname{Im}\{y_1\}-\operatorname{Im}\{s^-\}|^2}{\sigma_n^2}\right)\right\}, k\in\{2,3\}$$

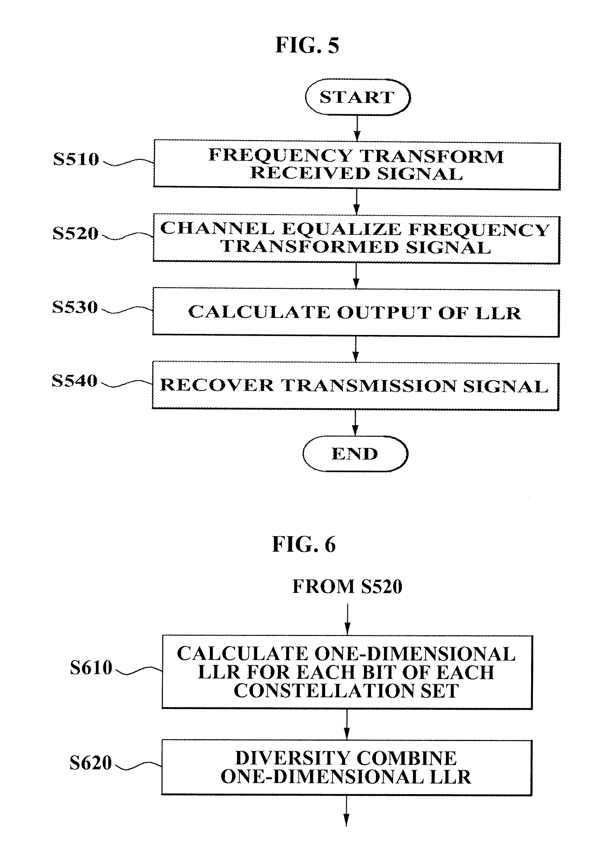

FIG. 5 is a flowchart illustrating a DCM demodulation method according to an exemplary embodiment of the present invention.

Referring to FIG. 5, the DCM demodulation method according to the exemplary embodiment of the present invention executes frequency transformation of a received signal in operation S510.

In this case, the frequency transformation operation may be an FFT. Also, in operation S520, the DCM demodulation method according to the present exemplary embodiment executes channel equalization of a frequency transformed signal.

Also, in operation S530, the DCM demodulation method according to the present exemplary embodiment respectively calculates a one-dimensional LLR for each bit of each constellation set, and diversity combines the calculated one-dimensional LLR to calculate output of an LLR, by equations 4 and 5.

Also, in operation S540, the DCM demodulation method according to the present embodiment uses the output of the LLR to recover a transmission signal.

In this case, operation S540 may recover the transmission signal by executing a Viterbi decoding.

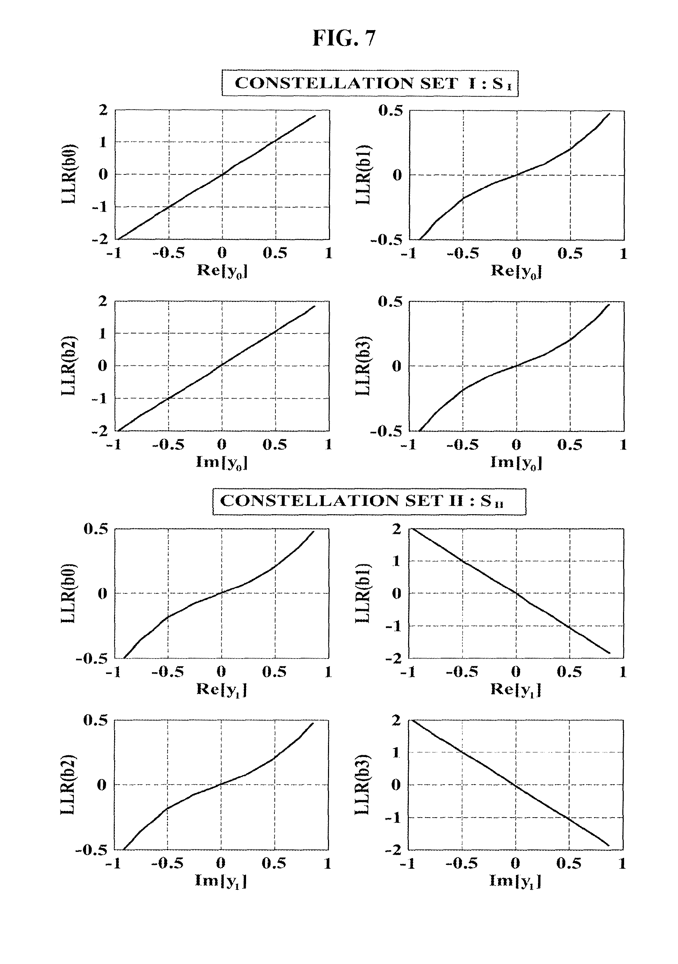

FIG. 6 is a flowchart illustrating operation S530 of the calculating an output of the LLR in FIG. 5.

Referring to FIG 6, in operation S610, the operation S530 of the calculating the output of the LLR in FIG. 5 respectively calculates a one-dimensional LLR for each bit of each constellation set.

In this case, the operation S610 may calculate the LLR for each bit using either a real number component or an imaginary number component of a DCM symbol.

In this case, the operation S610 may calculate the LLR using at least a partially linear function for either a real number component or the imaginary number component of the DCM symbol.

Also, in operation S620, diversity combines a calculated one-dimensional LLR for each bit of each constellation set to calculate output of a log likelihood ratio for operation S530 illustrated in FIG. 5. In this case, the one-dimensional LLR may be calculated as a result of a subtraction within each row of equations 4 and 5, and the output of the LLR may be calculated as a result of a final calculation of equations 4 and 5.

The DCM demapping method according to the above-described exemplary embodiment of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. The media may also be a transmission medium such as optical or metallic lines, wave guides, etc. including a carrier wave transmitting signals specifying the program instructions, data structures, etc. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention.

FIG. 7 is a diagram illustrating a one-dimensional LLR for each bit according to changes of a real number component or an imaginary number component of a DCM symbol.

Referring to FIG. 7, the one-dimensional LLR for each bit according to changes of the real number component or the imaginary number component of the DCM symbol is a one-variable function relying on either the real number component or the imaginary number component of the DCM symbol corresponding to one constellation set.

Accordingly, the one dimensional LLR for the each bit may be represented as the one-variable function and may approximate a combination of one-dimensional functions. Therefore, the one dimensional LLR for the each bit may be calculated using at least a partially linear function for either the real number component or the imaginary number component of the DCM symbol.

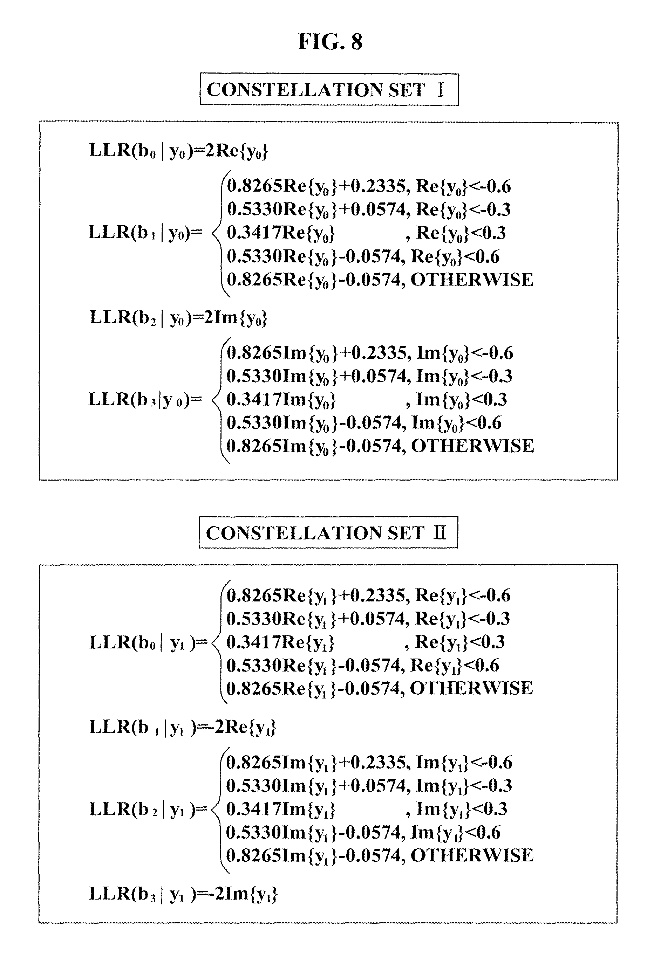

FIG. 8 is a diagram illustrating an equation that the one-dimensional LLR for the each bit is linear-modeled, according to changes of the real number component or the imaginary number component of the DCM symbol in FIG. 7.

Referring to FIG. 8, the one dimensional log likelihood may be a linear function in every section or a linear function in over two divided sections.

Contrary to conventional DCM mapping, DCM demapping of the exemplary embodiment may be comparatively easily accomplished since the one dimensional LLR is calculated by a simple linear function, and moreover, DCM demapping may be accomplished using only two multipliers and adders per DCM symbol, without an additional look-up table.

According to the exemplary embodiment of the present invention, there is provided a DCM demapping method and a DCM demapper which can simply and effectively execute DCM demapping by respectively calculating a one-dimensional LLR for each constellation set and diversity combining the calculated one-dimensional LLR.

Also, according to the exemplary embodiment of the present invention, there is provided a DCM demapping method and a DCM demapper which can simply and effectively calculate a one dimensional LLR for each bit using either a real number component or an imaginary number component of a DCM symbol.

Also, according to the exemplary embodiment of the present invention, there is provided a DCM demapping method and a DCM demapper which can calculate a one-dimensional LLR using at least a partially linear function for either a real number component or an imaginary number component of the DCM symbol for each bit.

Also, according to the exemplary embodiment of the present invention, there is provided a DCM demapping method and a DCM demapper which can embody demodulation for a data rate of over approximately 320 Mbps in a multi-band orthogonal frequency division multiplexing (MB-OFDM) system operated at a high-speed sampling rate of approximately 528 MHz.

Also, according to the exemplary embodiment of the present invention, there is provided a DCM demapping method and a DCM demapper which can effectively integrate a DCM modulator and reduce power consumption by simply executing DCM demapping.

Although a few exemplary embodiments of the present invention have been shown and described, the present invention is not limited to the described exemplary embodiments. Instead, it would be appreciated by those skilled in the art that changes may be made to these embodiments without departing from the principles and spirit of the invention, the scope of which is defined by the claims and their equivalents.

**Claims**

1. A Dual Carrier Modulation (DCM) demapping method, the method comprising:

    receiving DCM constellation sets;
    respectively calculating a one-dimensional log likelihood ratio (LLR) for each bit of each constellation set; and
    diversity combining the calculated one-dimensional LLR to calculate an output of an LLR.

2. The method of claim 1, wherein the respectively calculating one- dimensional LLR is by calculating the LLR for each bit using either a real number component or an imaginary number component of a DCM symbol.

3. The method of claim 1, wherein the DCM demapping method calculates the LLR and the output of an LLR by:

$$\Lambda(b_k) = \log\left\{\sum_{s^+\in\{s_i:b_k=1\}}\exp\left(-\frac{|\operatorname{Re}\{y_0\}-\operatorname{Re}\{s^+\}|^2}{\sigma_n^2}\right)\right\} - \log\left\{\sum_{s^-\in\{s_{II}:b_k=1\}}\exp\left(-\frac{|\operatorname{Re}\{y_1\}-\operatorname{Re}\{s^+\}|^2}{\sigma_n^2}\right)\right\}$$

$$+ \log\left\{\sum_{s^+\in\{s_i:b_k=0\}}\exp\left(-\frac{|\operatorname{Re}\{y_1\}-\operatorname{Re}\{s^-\}|^2}{\sigma_n^2}\right)\right\} - \log\left\{\sum_{s^-\in\{s_{II}:b_k=0\}}\exp\left(-\frac{|\operatorname{Re}\{y_1\}-\operatorname{Re}\{s^-\}|^2}{\sigma_n^2}\right)\right\}, k \in \{0,1\}$$

and

$$\Lambda(b_k) = \log\left\{\sum_{s^+\in\{s_i:b_k=1\}}\exp\left(-\frac{|\operatorname{Im}\{y_0\}-\operatorname{Im}\{s^+\}|^2}{\sigma_n^2}\right)\right\} - \log\left\{\sum_{s^-\in\{s_{II}:b_k=1\}}\exp\left(-\frac{|\operatorname{Im}\{y_0\}-\operatorname{Im}\{s^+\}|^2}{\sigma_n^2}\right)\right\}$$

$$+ \log\left\{\sum_{s^+\in\{s_i:b_k=0\}}\exp\left(-\frac{|\operatorname{Im}\{y_1\}-\operatorname{Im}\{s^+\}|^2}{\sigma_n^2}\right)\right\} - \log\left\{\sum_{s^-\in\{s_{II}:b_k=0\}}\exp\left(-\frac{|\operatorname{Im}\{y_1\}-\operatorname{Im}\{s^-\}|^2}{\sigma_n^2}\right)\right\}, k \in \{2,3\}$$

4. The method of claim 1, wherein the calculating a one-dimensional LLR is by calculating the LLR using at least a partially linear function for either a real number component or an imaginary number component of the DCM symbol.

5. A Dual Carrier Modulation (DCM) demodulation method comprising:

   receiving DCM constellation sets;
   diversity combining a calculated one-dimensional LLR for each bit of each constellation set to calculate an output of an LLR by:

$$\Lambda(b_k) = \log\left\{\sum_{s^+\in\{s_i:b_k=1\}}\exp\left(-\frac{|\operatorname{Re}\{y_0\}-\operatorname{Re}\{s^+\}|^2}{\sigma_n^2}\right)\right\} - \log\left\{\sum_{s^-\in\{s_{II}:b_k=1\}}\exp\left(-\frac{|\operatorname{Re}\{y_1\}-\operatorname{Re}\{s^+\}|^2}{\sigma_n^2}\right)\right\}$$

$$+ \log\left\{\sum_{s^+\in\{s_i:b_k=0\}}\exp\left(-\frac{|\operatorname{Re}\{y_1\}-\operatorname{Re}\{s^+\}|^2}{\sigma_n^2}\right)\right\} - \log\left\{\sum_{s^-\in\{s_{II}:b_k=0\}}\exp\left(-\frac{|\operatorname{Re}\{y_1\}-\operatorname{Re}\{s^-\}|^2}{\sigma_n^2}\right)\right\}, k \in \{0,1\}$$

and

$$\Lambda(b_k) = \log\left\{\sum_{s^+\in\{s_i:b_k=1\}}\exp\left(-\frac{|\operatorname{Im}\{y_0\}-\operatorname{Im}\{s^+\}|^2}{\sigma_n^2}\right)\right\} - \log\left\{\sum_{s^-\in\{s_{II}:b_k=1\}}\exp\left(-\frac{|\operatorname{Im}\{y_0\}-\operatorname{Im}\{s^+\}|^2}{\sigma_n^2}\right)\right\}$$

$$+ \log\left\{\sum_{s^+\in\{s_i:b_k=0\}}\exp\left(-\frac{|\operatorname{Im}\{y_1\}-\operatorname{Im}\{s^+\}|^2}{\sigma_n^2}\right)\right\} - \log\left\{\sum_{s^-\in\{s_{II}:b_k=0\}}\exp\left(-\frac{|\operatorname{Im}\{y_1\}-\operatorname{Im}\{s^-\}|^2}{\sigma_n^2}\right)\right\}, k \in \{2,3\}$$

   and
   decoding using the output of the LLR to recover a transmission signal.

6. The method of claim 5, wherein the recovering transmission signal executes a Viterbi decoding for the output of the LLR to recover the transmission signal.

**7.** The method of claim 5, further comprising:

executing frequency transformation of a received signal; and
executing channel equalization of the frequency transformed signal to generate DCM signals.

**8.** The method of claim 7, wherein the executing of the frequency transformation is accomplished by executing a fast Fourier Transform (FFT) for the received signal.

**9.** The method of claim 5, wherein the one-dimensional LLR is calculated using either a real number component or an imaginary number component of a DCM symbol for each bit.

**10.** The method of claim 5, wherein the calculating the output of the LLR is by calculating the one-dimensional LLR using at least a partially linear function for either the real number component or the imaginary number component of the DCM symbol.

**11.** A Dual Carrier Modulation (DCM) demapper comprising:

a one-dimensional LLR calculation unit that receives DCM constellation sets and respectively calculates a one-dimensional LLR for each bit of each constellation set; and
a diversity combining unit diversity combining the calculated one-dimensional LLR to calculate an output of an LLR.

**12.** The DCM demapper of claim 11, wherein the one-dimensional LLR calculation unit calculates the LLR for each bit using either a real number component or an imaginary number component of a DCM symbol.

**13.** The DCM demapper of claim 11, wherein the DCM demapper calculates the LLR and the output of the LLR by:

$$\Lambda(b_k) = log\left\{\sum_{s^+\in\{s_I:b_k=1\}} exp\left(-\frac{|\operatorname{Re}\{y_0\}-\operatorname{Re}\{s^+\}|^2}{\sigma_n^2}\right)\right\} - log\left\{\sum_{s^-\in\{s_I:b_k=1\}} exp\left(-\frac{|\operatorname{Re}\{y_1\}-\operatorname{Re}\{s^+\}|^2}{\sigma_n^2}\right)\right\}$$
$$+ log\left\{\sum_{s^+\in\{s_I:b_k=0\}} exp\left(-\frac{|\operatorname{Re}\{y_1\}-\operatorname{Re}\{s^+\}|^2}{\sigma_n^2}\right)\right\} - log\left\{\sum_{s^-\in\{s_{II}:b_k=0\}} exp\left(-\frac{|\operatorname{Re}\{y_1\}-\operatorname{Re}\{s^-\}|^2}{\sigma_n^2}\right)\right\}, k \in \{0,1\}$$

and

$$\Lambda(b_k) = log\left\{\sum_{s^+\in\{s_I:b_k=1\}} exp\left(-\frac{|\operatorname{Im}\{y_0\}-\operatorname{Im}\{s^+\}|^2}{\sigma_n^2}\right)\right\} - log\left\{\sum_{s^-\in\{s_{II}:b_k=1\}} exp\left(-\frac{|\operatorname{Im}\{y_0\}-\operatorname{Im}\{s^+\}|^2}{\sigma_n^2}\right)\right\}$$
$$+ log\left\{\sum_{s^+\in\{s_I:b_k=0\}} exp\left(-\frac{|\operatorname{Im}\{y_1\}-\operatorname{Im}\{s^+\}|^2}{\sigma_n^2}\right)\right\} - log\left\{\sum_{s^-\in\{s_{II}:b_k=0\}} exp\left(-\frac{|\operatorname{Im}\{y_1\}-\operatorname{Im}\{s^-\}|^2}{\sigma_n^2}\right)\right\}, k \in \{2,3\}$$

**14.** The DCM demapper of claim 11, wherein the DCM calculation unit calculates the one-dimensional LLR using at least a partially linear function for either the real number component or the imaginary number component of the DCM symbol.

# FIG. 1 (CONVENTIONAL ART)

$S_I$ : CONSTELLATION SET I

4-BIT INFORMATION

$b_0$, $b_1$, $b_2$, $b_3$

QUARDRATURE PHASE SHIFT KEYING(QPSK) UNIT

$x_0$, $x_1$, $x_2$, $x_3$

DUAL CARRIER MODULATION (DCM) SIGNAL MAPPING UNIT

$y_0$

$y_1$

INVERSE FAST FOURIER TRANSFORM (IFFT) UNIT

$$\begin{bmatrix} y_0 \\ y_1 \end{bmatrix} = \begin{bmatrix} 2 & 1 \\ 1 & -2 \end{bmatrix} \begin{bmatrix} x_0 + jx_2 \\ x_1 + jx_3 \end{bmatrix}$$

DCM MATRIX

130

$S_{II}$ : CONSTELLATION SET II

110        120

# FIG. 2

210        220        230        240

RECEIVED SIGNAL

FREQUENCY TRANSFORMATION UNIT

CHANNEL EQUALIZATION UNIT

$y_0$

$y_1$

DCM DEMAPPER

$x_0$, $x_1$, $x_2$, $x_3$

DECODER

$b_0$, $b_1$, $b_2$, $b_3$

# FIG. 3

310

320

$y_0$ → 

$y_1$ →

DIVERSITY COMBINING UNIT

TWO-DIMENSIONAL LOG LIKELIHOOD RATIO (LLR) CALCULATION UNIT

→ LLR($b_0$)
→ LLR($b_1$)
→ LLR($b_2$)
→ LLR($b_3$)

# FIG. 4

410

420

$y_0$ →

$y_1$ →

ONE-DIMENSIONAL LLR CALCULATION UNIT

DIVERSITY COMBINING UNIT

→ LLR($b_0$)
→ LLR($b_1$)
→ LLR($b_2$)
→ LLR($b_3$)

## FIG. 5

START

S510 — FREQUENCY TRANSFORM
RECEIVED SIGNAL

S520 — CHANNEL EQUALIZE FREQUENCY
TRANSFORMED SIGNAL

S530 — CALCULATE OUTPUT OF LLR

S540 — RECOVER TRANSMISSION SIGNAL

END

## FIG. 6

FROM S520

S610 — CALCULATE ONE-DIMENSIONAL
LLR FOR EACH BIT OF EACH
CONSTELLATION SET

S620 — DIVERSITY COMBINE
ONE-DIMENSIONAL LLR

# FIG. 7

**CONSTELLATION SET I : S_I**

**CONSTELLATION SET II : S_II**

# FIG. 8

CONSTELLATION SET I

$$LLR(b_0 \mid y_0) = 2Re\{y_0\}$$

$$LLR(b_1 \mid y_0) = \begin{cases} 0.8265Re\{y_0\}+0.2335, & Re\{y_0\}<-0.6 \\ 0.5330Re\{y_0\}+0.0574, & Re\{y_0\}<-0.3 \\ 0.3417Re\{y_0\}, & Re\{y_0\}<0.3 \\ 0.5330Re\{y_0\}-0.0574, & Re\{y_0\}<0.6 \\ 0.8265Re\{y_0\}-0.0574, & OTHERWISE \end{cases}$$

$$LLR(b_2 \mid y_0) = 2Im\{y_0\}$$

$$LLR(b_3 \mid y_0) = \begin{cases} 0.8265Im\{y_0\}+0.2335, & Im\{y_0\}<-0.6 \\ 0.5330Im\{y_0\}+0.0574, & Im\{y_0\}<-0.3 \\ 0.3417Im\{y_0\}, & Im\{y_0\}<0.3 \\ 0.5330Im\{y_0\}-0.0574, & Im\{y_0\}<0.6 \\ 0.8265Im\{y_0\}-0.0574, & OTHERWISE \end{cases}$$

CONSTELLATION SET II

$$LLR(b_0 \mid y_1) = \begin{cases} 0.8265Re\{y_1\}+0.2335, & Re\{y_1\}<-0.6 \\ 0.5330Re\{y_1\}+0.0574, & Re\{y_1\}<-0.3 \\ 0.3417Re\{y_1\}, & Re\{y_1\}<0.3 \\ 0.5330Re\{y_1\}-0.0574, & Re\{y_1\}<0.6 \\ 0.8265Re\{y_1\}-0.0574, & OTHERWISE \end{cases}$$

$$LLR(b_1 \mid y_1) = -2Re\{y_1\}$$

$$LLR(b_2 \mid y_1) = \begin{cases} 0.8265Im\{y_1\}+0.2335, & Im\{y_1\}<-0.6 \\ 0.5330Im\{y_1\}+0.0574, & Im\{y_1\}<-0.3 \\ 0.3417Im\{y_1\}, & Im\{y_1\}<0.3 \\ 0.5330Im\{y_1\}-0.0574, & Im\{y_1\}<0.6 \\ 0.8265Im\{y_1\}-0.0574, & OTHERWISE \end{cases}$$

$$LLR(b_3 \mid y_1) = -2Im\{y_1\}$$

**European Patent Office**

**EUROPEAN SEARCH REPORT**

Application Number

EP 07 10 5726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHONGJUN WANG ET AL: "A technique for demapping dual carrier modulated UWB OFDM signals with improved performance" IEEE 62ND VEHICULAR TECHNOLOGY CONFERENCE, 25 September 2005 (2005-09-25), - 28 September 2005 (2005-09-28) pages 38-42, XP010878417 NJ, USA ISBN: 0-7803-9152-7 * abstract * Sections I-V * figures 1-3 * | 1-14 | INV. H04L27/34 H04L25/06 |
| Y | US 2002/067777 A1 (JEONG GIBONG [US]) 6 June 2002 (2002-06-06) * abstract * * paragraphs [0005], [0006] * * paragraphs [0028], [0029] * * claims 1,9 * * figures 1,2 * EQUATIONS (1) and (4) | 1-14 | |
| Y | US 2005/141628 A1 (CHENG JUNG-FU [US]) 30 June 2005 (2005-06-30) * abstract * * paragraphs [0004], [0027], [0035], [0036], [0039], [0046] * * figures 2,3,5 * Equations (4), (7) and (8) | 1-14 | TECHNICAL FIELDS SEARCHED (IPC) H04L |
| A | FR 2 865 872 A1 (WAVECOM [FR]) 5 August 2005 (2005-08-05) * abstract * * page 6, line 4 - line 30 * * page 11, line 5 - line 26 * * page 15, line 17 - page 16, line 20 * | 1-14 | |

The present search report has been drawn up for all claims

| Place of search | Date of completion of the search | Examiner |
|---|---|---|
| The Hague | 17 August 2007 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 5726

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2007

| Patent document cited in search report | Publication date | Patent family member(s) | | Publication date |
|---|---|---|---|---|
| US 2002067777 A1 | 06-06-2002 | NONE | | |
| US 2005141628 A1 | 30-06-2005 | CN | 1898925 A | 17-01-2007 |
| | | EP | 1704691 A1 | 27-09-2006 |
| | | JP | 2007517472 T | 28-06-2007 |
| | | KR | 20060123396 A | 01-12-2006 |
| | | WO | 2005067239 A1 | 21-07-2005 |
| FR 2865872 A1 | 05-08-2005 | EP | 1766914 A1 | 28-03-2007 |
| | | WO | 2005083964 A1 | 09-09-2005 |

EPO FORM P0459

For more details about this annex : see Official Journal of the European Patent Office, No. 12/82